# EUROPÄISCHE PATENTSCHRIFT

(11) **EP 0 503 494 B1**
(45) Veröffentlichungstag und Bekanntmachung des Hinweises auf die Patenterteilung: **13.07.1994**
(21) Anmeldenummer: 92103840.2
(22) Anmeldetag: 06.03.1992
(51) Int. Cl.: B60P 3/38

(54) **Hubbett, insbesondere für Motorcaravans**
Fold-away bunk, particularly for motor caravans
Couchette repliable, notamment pour caravans à moteur

(30) Priorität: 08.03.1991 DE 4107407
(43) Veröffentlichungstag der Anmeldung: 16.09.1992
(73) Patentinhaber: DETHLEFFS GmbH, D-88316 Isny (DE)
(72) Erfinder: Schmidt, Gerhard, W-7972 Isny (DE)
(74) Vertreter: Patentanwälte Eisele, Otten & Roth

(56) Entgegenhaltungen:
- DE-A- 3 319 621
- DE-U- 7 737 023
- DE-U- 8 103 431

## Beschreibung

Die Erfindung betrifft ein Hubbett der im Oberbegriff des Patentanspruchs 1 bezeichneten Gattung (siche zum Beispiel DE-A-3 319 621).

Es kann für eine oder mehrere Personen vorgesehen sein und hat als Grundelement einen Rost oder ähnliche Auflagefläche für ein Polster. Die Besonderheit eines solchen Hubbetts besteht darin, daß es nicht auf dem Boden steht, sondern an Schwenkarmen aufgehängt ist und mit deren Hilfe in eine parallele oder schräge Aufbewahrungsstellung so hochgeschwenkt werden kann, daß der Raum darunter begehbar oder jedenfalls anderweitig verfügbar wird. Aus Platzgründen werden Hubbetten vor allem bei Fahrzeugen, z. B. Wohnwagen, verwendet.

Auch in der Gebrauchsstellung haben die Liegeflächen von Hubbetten normalerweise eine beträchtliche Höhe. Deshalb ist es bekannt, an der von der Wand abgewendeten Längsseite der Liegefläche ein Geländer von mindestens etwa 20 cm Höhe anzuordnen, welches verhindert, daß eine Person im Schlaf seitlich aus dem Bett rollt und herunterfällt. Das Geländer stört aber, wenn das Hubbett zur Aufbewahrung ganz an die Decke gehoben wird. Es ist daher ferner schon bekannt, das Schutzgeländer um eine zur Längskante der Liegefläche parallele Achse derart schwenkbar zu lagern, daß es aus der zur Liegefläche senkrechten Wirkstellung zur Liegefläche hin in eine Aufbewahrungsstellung umgeklappt werden kann. Um ein derartiges Hubbett in Benutzung zu nehmen, sind also zwei Handgriffe nötig: Zuerst ist das Bett aus der Aufbewahrungsstellung herunterzuschwenken und dann ist das Schutzgeländer hochzuklappen.

Der Erfindung liegt die Aufgabe zugrunde, die Handhabung eines solchen Hubbetts zu vereinfachen, d. h. die Anzahl der Betätigungsvorgänge bei der Inbenutzungnahme und beim Aufbewahren des Hubbetts zu verringern.

Diese Aufgabe wird erfindungsgemäß durch die im kennzeichnenden Teil des Patentanspruchs 1 angegebenen Merkmale gelöst. Es ist demnach nicht mehr erforderlich, das Schutzgeländer aufzustellen oder umzulegen, vielmehr wird diese Bewegung von den jeweiligen Schwenkarmen beim Verschwenken des Hubbetts selbsttätig ausgeführt. Nach dem Herabschwenken des Hubbetts in die Gebrauchsstellung kann es unmittelbar bestiegen werden.

Eine besonders zweckmäßige Ausführungsform der Erfindung besteht darin, daß das Geländer, welches beispielsweise aus einem Rohrbogen oder einem Rahmen bestehen kann, mit dem betreffenden Schwenkarm oder besser den beiden geländerseitigen Schwenkarmen fest verbunden ist. Das setzt allerdings die Übereinstimmung des Drehsinns der betreffenden Schwenkarme und des Geländers voraus. Ist der Drehsinn entgegengesetzt, so kann das Geländer mit den Schwenkarmen auch getrieblich, z. B. über Zahnräder verbunden sein.

Im folgenden Ausführungsbeispiel soll die Erfindung anhand einer Zeichnung näher erläutert werden. Im einzelnen zeigen
- Fig. 1: einen Querschnitt eines Motorcaravan-Aufbaues in Fahrtrichtung gesehen und
- Fig. 2: einen Teillängsschnitt II-II gemäß Fig. 1.

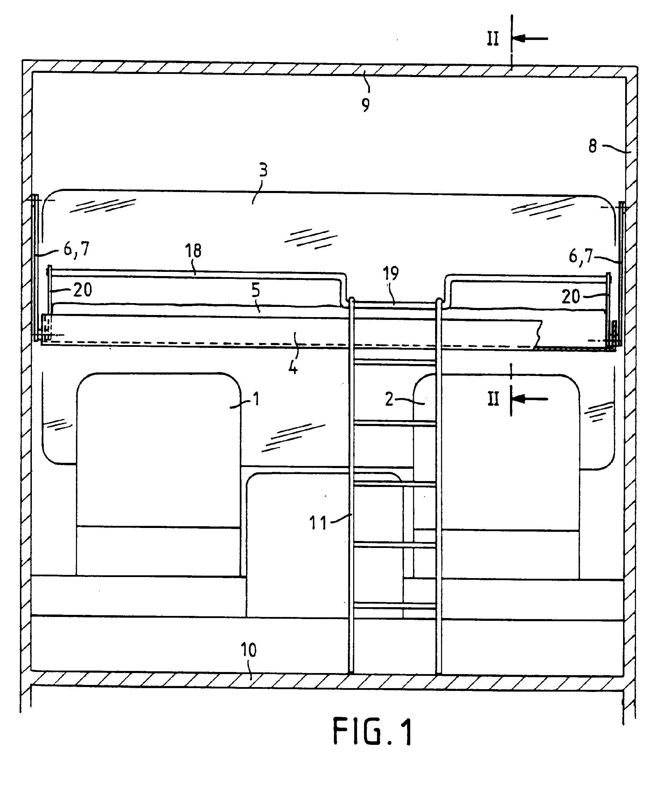

Fig. 1 zeigt den vorderen Bereich des mit einem Ganzkofferaufbau gestalteten Fahrzeugs. Links ist der Fahrersitz 1 und rechts der Beifahrersitz 2. Die Windschutzscheibe ist mit 3 bezeichnet. Über diesem Fahrerbereich befindet sich ein Hubbett mit einer Tragwanne 4 und einem Liegepolster 5. Die Tragwanne 4 ist an ihren kopf- und fußseitigen Stirnwänden mit je zwei Schwenkarmen 6, 7 an den Fahrzeugseitenwänden 8 aufgehängt. Dadurch kann das Bett während der Fahrt in eine Aufbewahrungsstellung an das Dach 9 herangeschwenkt werden. Fig. 1 zeigt die Gebrauchsstellung. Hierbei befindet sich die Liegefläche etwa 1,6 m über dem Fahrzeugboden 10 und kann mittels einer angestellten Leiter 11 erreicht werden.

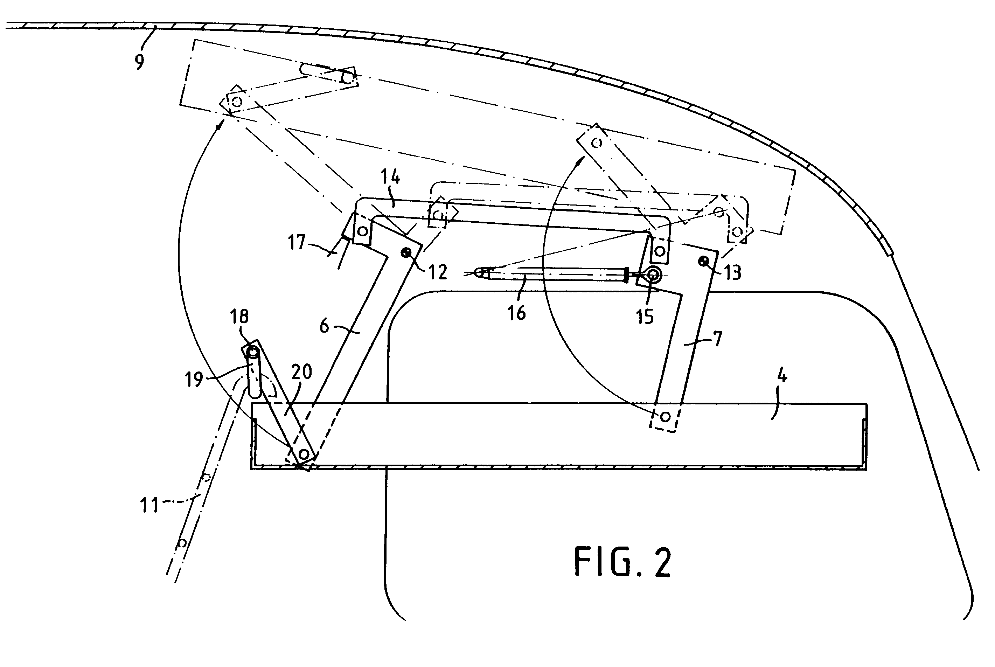

Fig. 2 zeigt den Aufhängemechanismus im einzelnen. Hier ist die Aufbewahrungsstellung strichpunktiert angedeutet. Der längere Schwenkarm 6 und der kürze Schwenkarm 7 aus Blech haben beide einen L-förmigen Zuschnitt. Sie sind an den Ecken bei 12 und 13 schwenkbar an der Wand gelagert und mit ihren unteren Enden ebenfalls schwenkbar mit der betreffenden Stirnwand der Tragwanne 4 verbunden. Beide kurzen Schenkel der Schwenkarme sind über eine Koppel 14 miteinander verbunden. Der breitere kurze Schenkel des Schwenkarms 7 hat außerdem noch einen zweiten Anlenkpunkt 15 für eine Gasdruckfeder 16, die anderenends an der Wand gelagert ist. Sie erleichtert das Hochschwenken des Hubbetts. In der mit ausgezogenen Strichen dargestellten Gebrauchsstellung legt sich der kurze Schenkel des langen Schwenkarms 6 an einen Anschlag 17. In der Aufbewahrungsstellung wird das Hubbett durch die Gasdruckfeder 16 und einen nicht dargestellten Verriegelungsmechanismus gehalten.

Wie bei derartigen, verhältnismäßig hoch über dem Fußboden angeordneten Betten üblich, ist an der dem Fahrzeuginnenraum zugewandten Längsseite ein Geländer angebracht. Es besteht aus einem geraden Geländerrohr 18, das zum leichteren Einstieg eine U-förmige doppelte Abkröpfung 19 aufweist. In diese werden auch die hakenförmigen oberen Holmenden der Leiter 11 eingehängt. An den Enden des Geländerrohrs 18 sind flache Arme 20 fest angebracht, die wiederum mit den langen Schwenkarmen 6 fest verbunden sind. Diese letztere Verbindung ist derart verwirklicht, daß die unteren Schwenkzapfen der Schwenkarme 6 die Stirnwände der Tragwanne 4 durchsetzen und an der Innenseite mit den Armen 20 fest verbunden sind.

Das hat, wie Fig. 2 zeigt, zur Folge, daß beim Hochschwenken des Hubbetts in die Aufbewahrungsstellung infolge der Bewegungen der Schwenkarme 6 bezüglich der Tragwanne 4 gleichzeitig die Arme 20 mitverschwenkt werden. Das Geländerrohr 18 schwenkt also zur Liegefläche hin und legt sich auf diese, so daß das Bett bis zur Berührung an das Fahrzeugdach herangebracht werden kann, ohne daß das Geländerrohr 18 stört. Beim Herabschwenken in die Benutzungsstellung richtet sich das Geländer selbsttätig wieder auf und erfüllt seine Schutzfunktion, ohne daß es eines besonderen Handgriffs bedarf.
- 1: Fahrersitz
- 2: Beifahrersitz
- 3: Windschutzscheibe
- 4: Tragwanne
- 5: Liegepolster
- 6: langer Schwenkarm
- 7: kurzer Schwenkarm
- 8: Seitenwand
- 9: Dach
- 10: Boden
- 11: Leiter
- 12: Drehpunkt
- 13: Drehpunkt
- 14: Koppel
- 15: Anlenkpunkt
- 16: Gasdruckfeder
- 17: Anschlag
- 18: Geländerrohr
- 19: Abkröpfung
- 20: Arm

## Patentansprüche

1. Hubbett, das mit Hilfe von je zwei mit längsgerichteten Achsen am Kopf- und Fußende angelenkten Schwenkarmen (6, 7) zwischen einer unteren Gebrauchsstellung und einer oberen Aufbewahrungsstellung verschwenkbar ist, und das ein längs der freien Längskante der Liegefläche angeordnetes, zur Liegefläche hin umlegbares Geländer (18-20) aufweist, insbesondere zum Einbau über dem Fahrer- und Beifahrersitz eines Motorcaravans mit Ganzkofferaufbau, dadurch gekennzeichnet, daß wenigstens einer der beiden geländerseitigen Schwenkarme (6) mit dem Geländer (18, 20) derart gekoppelt ist, daß beim Verschwenken des Hubbetts in die Gebrauchsstellung das Geländer von dem Schwenkarm (6) in die wirksame Stellung hochgeklappt und bei der entgegengesetzten Schwenkbewegung umgelegt wird.

2. Hubbett nach Anspruch 1, dadurch gekennzeichnet, daß das Geländer (18, 20) mit dem betreffenden Schwenkarm (6) fest verbunden ist.

3. Hubbett nach Anspruch 1, dadurch gekennzeichnet, daß das Geländer mit dem betreffenden Schwenkarm getrieblich verbunden ist.

## Claims

1. Lifting bed, which by means of respectively two swinging arms (6, 7) pivoted at the top and bottom end by longitudinally directed pins, can be swung between a lower position for use and an upper storage position, and which comprises a rail (18, 20) arranged along the free longitudinal edge of the reclining surface and which is able to be lowered towards the reclining surface, in particular for installation above the driver's and passenger's seat of a motor caravan with an all-box construction, characterised in that at least one of the two swinging arms (6) adjacent the rail is connected to the rail (18, 20) so that upon tilting the lifting bed into the position of use, the rail is swung upwards by the tilting arm (6) into the operative position and is laid down at the time of the opposing swinging movement.

2. Lifting bed according to Claim 1, characterised in that the rail (18, 20) is securely connected to the respective swinging arm (6).

3. Lifting bed according to Claim 1, characterised in that the rail is connected to the respective swinging arm by way of gears.

## Revendications

1. Couchette repliable, qui, à l'aide d'à chaque fois deux bras pivotants (6,7) articulés à l'extrémité de tête et à l'extrémité de pied avec des axes orientés longitudinalement, peut être pivotée entre une position de service inférieure et une position escamotée supérieure, et qui présente un garde-corps (18-20) agencé le long du bord longitudinal libre de la surface de couchage et repliable vers la surface de couchage, en particulier pour sa mise en place au-dessus du siège du conducteur et du passager d'une autocaravane à construction entièrement coffrée,
caractérisée en ce qu'au moins un des deux bras pivotants (6), du côté du garde-corps, est couplé au garde-corps (18,20), de sorte que, lorsque la couchette est pivotée dans la position de service, le garde-corps est rabattu vers le haut, par le bras pivotant (6), dans sa position active et il est replié lors du pivotement inverse.

2. Couchette repliable selon la revendication 1,
caractérisée en ce que le garde-corps (18,20) est solidaire du bras pivotant correspondant (6).

3. Couchette repliable selon la revendication 1,
caractérisée en ce que le garde-corps est relié au bras pivotant correspondant par une transmission.
